## Europäisches Patentamt
## European Patent Office
## Office européen des brevets

(19)

(11) Veröffentlichungsnummer: **0 040 725**
**B1**

(12) **EUROPÄISCHE PATENTSCHRIFT**

(45) Veröffentlichungstag der Patentschrift:
**22.02.84**

(51) Int. Cl.³: **F 16 K 1/42,** F 16 K 1/226

(21) Anmeldenummer: **81103450.3**

(22) Anmeldetag: **07.05.81**

(54) **Dichtungsanordnung.**

(30) Priorität: **22.05.80 DE 3019516**

(43) Veröffentlichungstag der Anmeldung:
**02.12.81 Patentblatt 81/48**

(45) Bekanntmachung des Hinweises auf die Patenterteilung:
**22.02.84 Patentblatt 84/8**

(84) Benannte Vertragsstaaten:
**AT BE CH FR GB IT LI NL SE**

(56) Entgegenhaltungen:
**DE - A - 2 307 212**
**DE - B - 1 133 606**
**FR - A - 2 224 681**
**FR - A - 2 327 459**
**US - A - 3 042 359**

(73) Patentinhaber: **Klinger AG, Baarerstrasse 10,**
**CH-6301 Zug (CH)**

(72) Erfinder: **Wirz, Peter, Neudorfstrasse 832,**
**CH-5726 Unterkulm/Aargau (CH)**

(74) Vertreter: **Dipl.-Ing. H. Marsch Dipl.-Ing. K. Sparing**
**Dipl.-Phys.Dr. W.H. Röhl Patentanwälte,**
**Rethelstrasse 123, D-4000 Düsseldorf (DE)**

BUNDESDRUCKEREI BERLIN

## Dichtungsanordnung

Die Erfindung betrifft eine Dichtungsanordnung mit zwei relativ zueinander bewegbaren, ringförmigen metallischen Dichtelementen, die mit je einem Abdichtteil verbunden oder an diesem selbst ausgebildet sind und in Dichtstellung unter Pressung aneinanderliegen. Solche Dichtungsanordnungen werden insbesondere für Absperrorgane verwendet, weil sie über weite Temperaturbereiche vorteilhaft verwendbar sind. Bei vielen bekannten Anordnungen liegen die beiden Dichtelemente mit einer breiten Ringfläche dichtend aneinander; Schwierigkeiten ergeben sich dann, wenn die Pressung zwischen den beiden Elementen in Dichtstellung nur relativ gering sein darf, beispielsweise wenn diese unter gleitender Relativbewegung in Dichtstellung gebracht und die auftretenden Drehmomente in erträglichen Grenzen gehalten werden müssen. Bei solchen Dichtungsanordnungen wird dieses Problem dadurch zu lösen versucht, daß die beiden Dichtelemente gegeneinander eingeläppt werden oder eines der Dichtelemente mit einer dicken Weichmetallschicht versehen wird, in welcher sich die dichtende Ringfläche ausbildet. Da sich die zulässige Anpreßkraft auf eine Ringfläche verteilt, ist dort die Flächenpressung relativ klein und eine gegenseitige Anpassung der Dichtelemente bei druck- oder temperaturbedingten Verformungen dieser Teile nicht möglich.

Im übrigen ist aus der DE-A-2 307 212 ein metallisch abgedichtetes Rückschlagventil bekannt, bei dem der Ventilkörper als auch der Ventilsitz aus Chromnickelstahl großer Härte bestehen, jedoch sind hier keine dünnwandigen elastischen Dichtelemente vorgesehen.

Die Erfindung zielt darauf ab, die geschilderten Nachteile zu vermeiden und geht von einer bekannten Bauweise aus, bei der ein Dichtelement ein dünnwandiger, elastisch verformbarer, an dem anderen Dichtelement in Dichtstellung im wesentlichen mit Linienberührung anliegender Körper ist. Derartige Dichtungsanordnungen sind z. B. aus der US-A-3 042 359, der DE-B-1 133 606 und den FR-A-2 327 459 und 2 224 681 bekannt. Ein solches Dichtelement kann sich der jeweiligen Oberflächenform des anderen Dichtelementes unter elastischer Vorspannung mit gleichmäßiger Belastung anpassen, wobei infolge der Linienberührung die Flächenpressung vergleichsweise höher sein kann. Trotzdem wird in vielen Fällen wegen der nur begrenzt zulässigen Anpreßkraft nicht die gewünschte Dichtheit erreicht. Bei einer solchen Bauweise kann durch Einläppen der Elemente wegen der geringen Breite der Dichtlinien keine Verbesserung der Dichtheit erzielt werden, eine Weichmetallschicht hat wegen der hohen Flächenpressung nur eine geringe Lebensdauer.

Die Erfindung beruht auf dem Gedanken, einerseits zur Vermeidung von Undichtheiten die Unebenheiten im Bereich der Berührungslinien mit einem Weichmetall auszugleichen und andererseits die die Berührungslinien bildenden Flächen mit einer gewissen Härte auszustatten, damit die tragenden aneinander gleitenden Teile dieser Flächen die nötige Festigkeit aufweisen.

Die Dichtungsanordnung gemäß der Erfindung ist dadurch gekennzeichnet, daß die Dichtelemente an den die Berührungslinien bildenden Flächen eine Rockwell C-Härte von über 30 HRC (was einer Vickers-Härte von 298 HV entspricht), vorzugsweise 50 HRC (525 HV), aufweisen und an mindestens einem Dichtelement die Unebenheiten im Bereich der Berührungslinien durch ein Weichmetall ausgefüllt sind.

Bei einer solchen Ausbildung der Dichtelemente werden die Kräfte zwischen den beiden Elementen vor allem über die nicht ausgefüllten Teile der die Berührungslinien bildenden Flächen übertragen, so daß auch bei der relativ hohen Flächenpressung einer Linienberührung keine Schäden an den Elementen auftreten, wobei die Dichtwirkung durch die Ausfüllung mit Weichmetall gewährleistet ist. In der Praxis wird mindestens eine der Berührungslinien bildenden Fläche zur Gänze anfangs mit einem Weichmetall beschichtet sein, doch wird infolge der Linienberührung schon nach einigen Bewegungen das Weichmetall so weit abgetragen sein, daß es nur Unebenheiten ausfüllt. Als Weichmetall kommen leicht umformbare Metalle, wie Kupfer, Weichnickel oder dergleichen, in Frage. Aus Gründen der für Armaturen wichtigen Buntmetallfreiheit und Korrosionsfestigkeit bei genügender Weichheit ist Silber vorteilhaft.

Das verformbare Dichtelement kann vorteilhaft als Berührungslinien bildende Fläche eine stromlos aufgebrachte Schicht aus Nickel, vorzugsweise mit einer Dicke von 10 bis 60 μm, aufweisen, wobei in vielen Fällen das beste Zusammenwirken mit der Gegenfläche bei einer Vickers-Härte von etwa 600 HV gegeben ist. Das Weichmetall kann, insbesondere aus Gründen der Korrosionsfestigkeit, im Einbauzustand eine Silberbeschichtung sein, die vorzugsweise eine Dicke von 5 bis 10 μm und eine Härte von etwa 80 HV aufweist.

Eine besonders dauerhafte Dichtfunktion ist dann gewährleistet, wenn die Silberbeschichtung auf der harten Schicht des verformbaren Dichtelementes vorgesehen ist, vorzugsweise unter Einschaltung einer die Verbindung verbessernden Zwischenschicht aus Gold. Sofern eines der Dichtelemente unverformbar ist, kann es auch zur Gänze hart ausgebildet sein, so daß sich die vorteilhafteste und einfachste Ausführungsform für dieses Dichtelement dann ergibt, wenn es aus härtbarem Stahl ausgebildet ist und an der Berührungslinien bildenden Fläche eine Härte von 50 bis 60 HRC aufweist.

Die Erfindung wird nun anhand der in der Zeichnung dargestellten Ausführungsbeispiele näher erläutert.

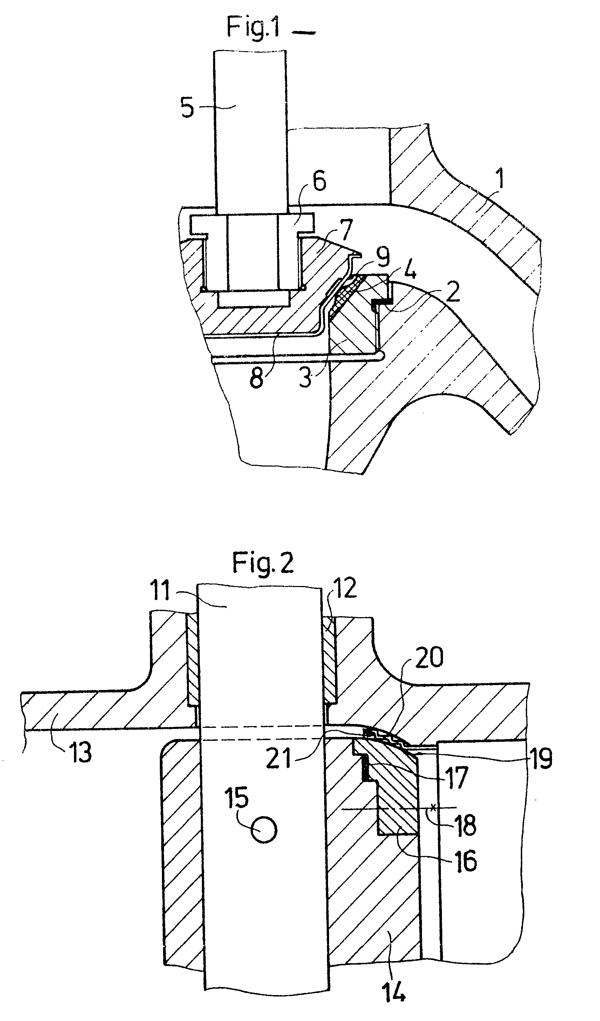

Die Fig. 1 und 2 zeigen im Aufrißschnitt Teile eines Hubventils bzw. einer Klappe mit einer erfindungsgemäßen Dichtungsanordnung.

Bei dem aus Fig. 1 ersichtlichen Hubventil ist im Gehäuse 1 unter Zwischenschaltung einer Dichtung 2 ein Sitzring 3 verschraubt. Mit der Betätigungsspindel 5 dieses Ventils ist über eine zweiteilige Verschraubung 6 als Abdichtteil ein Ventilkegel 7 drehbar, aber axial unverschieblich, verbunden. An dem Ventilkegel 7 ist eine dünnwandige napfförmige Hülse 8 durch Verschweißen dicht befestigt. Diese Hülse 8 bildet ein Dichtelement der Dichtungsanordnung, wogegen der im Gehäuse eingeschraubte Sitzring 3 das andere Dichtelement bildet. Wenn durch Axialverschiebung der Spindel der das Sperrglied des Ventils bildende Ventilkegel gegen den Sitzring 3 bewegt wird, schlägt der kegelförmige Ringteil der Hülse 8 unter Linienberührung an der Bombierung 4 der Kegelbohrung des Sitzringes an, wobei er sich bei Weiterbewegung der Spindel elastisch verformt und so die zur Anpassung an die Bombierung 4 des Sitzringes 3 nötigen elastischen Anpreßkräfte aufbringt. Gemäß der Erfindung ist am ringförmigen, mit dem Kegel 7 verbundenen, elastisch verformbaren Dichtelement 8 als die Berührungslinie bildende Außenfläche 9 eine Schicht aus galvanisch abgeschiedenem Hartchrom vorgesehen, die eine Dicke von 5 μm und eine Härte von 940 HV aufweist. Beim das andere unverformbare Dichtelement bildenden Sitzring 3 ist die Kegelbohrung samt ihrer Bombierung 4, welche die Berührungslinie bildet, mit einer Auftragsschweißung aus Stellit mit einer Härte von vorzugsweise 40 HRC versehen. Auf dieser harten Kegelbohrung ist eine Metallbeschichtung aus Kupfer vorgesehen, deren Härte 120 HV bei einer Schichtdicke von 5 bis 10 μm ist. Infolge der Tatsache, daß beide Dichtelemente an den in Dichtstellung zusammenwirkenden, die Berührungslinien bildenden Flächen große Härte aufweisen und die vorgesehene Kupferbeschichtung sich zwar nach mehrmaliger Betätigung zum Teil abreibt, aber die Unebenheiten ausgleicht, ist die erwünschte Dichtheit auch mit relativ geringen Axialkräften gegeben. .

Die in Fig. 2 dargestellte Absperrklappe besteht im wesentlichen aus einer Betätigungswelle 11, die unter Zwischenschaltung eines Gleitlagers 12 in einem Gehäuse 13 drehbar, aber axial unverschieblich, gelagert ist. Mit der Betätigungswelle 11 ist als Abdichtteil eine Klappenscheibe 14 über Stifte 15 fest verbunden. In jenem Bereich der Klappenscheibe 14, die in Schließstellung die Abdichtung gegen das Gehäuse 13 bewirkt, ist ein gesonderter Ring 16 eingesetzt, der mit der Klappenscheibe 4 unter Zwischenschaltung einer Dichtung 17 durch Schrauben 18 fest und dicht verbunden ist. Dieser ein Element der Dichtungsanordnung bildende Ring 16 wirkt mit einem aus vorzugsweise austenitischem Blech geformten, mehrere konzentrische Wellen aufweisenden Körper als Dichtelement 20 zusammen, das mit dem Gehäuse 13 durch Schweißung dicht verbunden ist. Dieses Dichtelement 20 stützt sich in der dargestellten Dichtstellung elastisch verformt mit seinen Wellen am Ring 16 und am Gehäuse 13 ab. Da drei Wellen unter Linienberührung am Ring 16 aufliegen, ergeben sich drei hintereinander geschaltete Abdichtungslinien. Bei Verdrehung der mit der Welle 1 verbundenen Teile in die Dichtstellung tritt zwischen dem Ring 16 und diesen drei Wellen des elastischen Dichtelementes 20 eine gleitende Relativbewegung auf, wobei der Anpreßdruck an den Berührungslinien bis zum Erreichen der dichtenden Endstellung zunimmt. Die Lage der Dichtelemente 16, 20 zueinander ist so gewählt, daß bei der Verformung der dünnwandigen Dichtelementes 20 nur eine Pressung auftreten kann, die ein noch zulässiges Betätigungsdrehmoment ergibt. Der an der Klappenscheibe 14 befestigte Ring 16 ist aus härtbarem Chromstahl mit einem Chromgehalt von etwa 13 bis 17% gefertigt und weist infolge Oberflächenhärtung an der die Berührungslinie bildenden Dichtfläche 19 eine Härte von etwa HRC 56 bis 60 auf.

Das aus Blech gefertigte elastische Dichtelement 20 weist als Berührungslinien bildende Fläche 21 eine Schicht aus chemisch aufgebrachtem Nickel, vorzugsweise Nickel-Phosphor, mit einer Schichtdicke von max. 60 μm auf. Durch eine ein- bis zweistündige Wärmebehandlung unter Schutzgas oder im Vakuum bei 650° C ergibt sich eine Härte von etwa 600 HV. Unter Zwischenschaltung einer Schicht aus Gold in de der Dicke von etwa 0,2 μm ist eine ultra-reine Silberbeschichtung von 5 μm bei einer Härte von ca. 80 HV aufgebracht. Nach einigen Betätigungen ist die Silberschicht zwar an den Erhebungen der die Berührungslinien bildenden Fläche weitgehend abgerieben, in den Vertiefungen jedoch vorhanden; wie weit sich das Silber auch in den Vertiefungen der am anderen Dichtelement die Berührungslinien bildenden Fläche auf Dauer absetzt, konnte nicht einwandfrei festgestellt werden. Jedenfalls ist auch nach einigen tausend Betätigungen und bei Temperaturen bis 400° C eine einwandfreie Dichtheit in Schließstellung gewährleistet, wobei die Übertragung der Anpreßkräfte zwischen den Dichtelementen offenbar vor allem über die Erhebungen der harten, die Berührungslinien bildenden Flächen erfolgt.

**Patentansprüche**

1. Dichtungsanordnung, insbesondere für Absperrorgane, mit zwei relativ zueinander bewegbaren ringförmigen metallischen Dichtelementen (3, 8; 16, 20), die je mit einem Abdichtteil (3, 7; 13, 14) verbunden oder an diesem selbst ausgebildet sind, wobei ein Dichtelement (8; 20) ein dünnwandiger, elastisch verformbarer, an dem anderen Dichtelement (3;

16) in Dichtstellung unter Pressung im wesentlichen mit Linienberührung anliegender Körper ist, dadurch gekennzeichnet, daß die Dichtelemente (3, 8; 16, 20) an den die Berührungslinien bildenden Flächen (4, 9; 19, 21) eine Härte von über 30 HRC (Rockwell C-Härte) (298 HV-Vikkers-Härte), vorzugsweise über 50 HRC (525 HV), aufweisen und an mindestens einem Dichtelement (3, 8; 16, 20) die Unebenheiten im Bereich der Berührungslinien durch ein Weichmetall ausgefüllt sind.

2. Dichtungsanordnung nach Anspruch 1, dadurch gekennzeichnet, daß das verformbare Dichtelement (8; 20) als Berührungslinie bildende Fläche eine stromlos aufgebrachte Ni-Schicht, vorzugsweise mit einer Dicke von 10 bis 60 µm, aufweist.

3. Dichtungsanordnung nach Anspruch 2, dadurch gekennzeichnet, daß die Nickelschicht eine Härte von etwa 600 HV aufweist.

4. Dichtungsanordnung nach einem der Ansprüche 1 bis 3, dadurch gekennzeichnet, daß im Einbauzustand das Weichmetall, insbesondere Silber, in Form einer Beschichtung der die Berührungslinien bildenden Fläche (4, 9; 19, 21) vorliegt, wobei die Beschichtung vorzugsweise eine Dicke von 5 bis 10 µm und eine Härte von 80 HV aufweist.

5. Dichtungsanordnung nach einem der Ansprüche 2 bis 4, dadurch gekennzeichnet, daß eine Silberbeschichtung auf der harten Schicht des verformbaren Dichtelementes (8; 20) vorgesehen ist, vorzugsweise unter Einschaltung einer Zwischenschicht aus Gold.

6. Dichtungsanordnung nach Anspruch 5, dadurch gekennzeichnet, daß das andere Dichtelement (3; 16) aus härtbarem Stahl ausgebildet ist und an der Berührungslinien bildenden Fläche eine Härte von 50 bis 60 HRC aufweist.

**Claims**

1. Sealing arrangement, in particular for shut-off devices, having two annular metallic sealing elements (3, 8; 16, 20) which are movable relative to one another and are each joined to a gasket part (3, 7; 13, 14) or are formed on the latter itself, one sealing element (8; 20) being a thin-walled, elastically deformable body which, in the sealing position, bears against the other sealing element (3; 16) under pressure substantially with line contact, characterised in that the sealing elements (3, 8; 16, 20) have, on the surfaces (4, 9; 19, 21) forming the contact lines, a hardness of more than 30 HRC (Rockwell C-hardness) (298 HV (Vickers-hardness)), preferably more than 50 HRC (525 HV) and the irregularities in the region of the contact lines are filled with a soft metal on at least one sealing element (3, 8; 16, 20).

2. Sealing arrangement according to Claim 1, characterised in that the deformable sealing element (8; 20) has, as the surface forming the contact line, a nickel layer applied without current and preferably having a thickness of 10 to 60 µm.

3. Sealing arrangement according to Claim 2, characterised in that the nickel layer has a hardness of about 600 HV.

4. Sealing arrangement according to one of Claims 1 to 3, characterised in that, in the installed state, the soft metal, in particular silver, is present in the form of a coating on the surface (4, 9; 19, 21) forming the contact lines, the coating preferably having a thickness of 5 to 10 µm and a hardness of 80 HV.

5. Sealing arrangement according to one of Claims 2 to 4, characterised in that a silver coating is provided on the hard layer of the deformable sealing element (8; 20), preferably with the interposition of a gold interlayer.

6. Sealing arrangement according to Claim 5, characterised in that the other sealing element (3; 16) is formed from hardenable steel and has a hardness of 50 to 60 HRC on the surface forming the contact lines.

**Revendications**

1. Dispositif d'étanchéité, notamment pour organes d'arrêt comprenant deux éléments d'étanchéité métalliques annulaires (3, 8; 16, 20) mobiles l'un par rapport à l'autre, qui sont réunis chacun à une pièce de fermeture étanche (3, 7; 13, 14) ou formés sur cette pièce elle-même, un élément d'étanchéité (8; 20) étant un corps à paroi mince, élastiquement déformable, qui, dans la position de fermeture étanche, est appliqué sous pression, dans l'ensemble avec contact linéaire, contre l'autre élément d'étanchéité (3; 16), caractérisé en ce que les éléments d'étanchéité (3, 8; 16, 20) présentent, sur les surfaces (4, 9; 19, 21) qui forment les lignes de contact, une dureté de plus de 30 HRC (dureté Rockwell C) (298 HV — dureté Vickers), de préférence de plus de 50 HRC (525 HV), et, sur au moins un élément d'étanchéité (3, 8; 16, 20), les défauts de planéité sont nivelés par un métal tendre dans la région des lignes de contact.

2. Dispositif d'étanchéité selon la revendication 1, caractérisé en ce que l'élément d'étanchéité déformable (8; 20) comporte, comme surface formant la ligne de contact, une couche de Ni déposée sans courant électrique, de préférence avec une épaisseur de 10 à 60 µm.

3. Dispositif d'étanchéité selon la revendication 2, caractérisé en ce que la couche de nickel présente une dureté d'environ 600 HV.

4. Dispositif d'étanchéité selon l'une des revendications 1 à 3, caractérisé en ce que, à l'état de montage, le métal tendre, notamment l'argent, est prévu sous la forme d'un revêtement de la surface (4, 9; 19, 21) qui forme les lignes de contact, le revêtement ayant de préférence une épaisseur de 5 à 10 µm et une dureté de 80 HV.

5. Dispositif d'étanchéité selon l'une des revendications 2 à 4, caractérisé en ce qu'un revêtement d'argent est prévu sur la couche dure

7 **0 040 725**

de l'élément d'étanchéité déformable (8; 20), de préférence avec interposition d'une couche d'or intermédiaire.

6. Dispositif d'étanchéité selon la revendication 5, caractérisé en ce que l'autre élément d'étanchéité (3; 16) est formé d'acier apte à la trempe et a une dureté de 50 à 60 HRC sur la surface formant les lignes de contact.

## Fig.1 —

## Fig. 2